# FASCICULE DE BREVET EUROPEEN

(11) **EP 3 922 149 B1**
(45) Date de publication et mention de la délivrance du brevet: **05.07.2023**
(21) Numéro de dépôt: 21177848.5
(22) Date de dépôt: 04.06.2021
(51) Int. Cl.: A47J 36/10, A47J 43/046

(54) **APPAREIL DE PREPARATION CULINAIRE**
GERÄT ZUR ESSENSZUBEREITUNG
FOOD PREPARATION APPLIANCE

(30) Priorité: 05.06.2020 FR 2005919
(43) Date de publication de la demande: 15.12.2021
(73) Titulaire: SEB S.A., 69130 Ecully (FR)
(72) Inventeur: MORICE, Katell, 53100 Mayenne (FR); DESHAYES, Jean-Louis, 53440 La Chapelle-au-Riboul (FR); GERARD, Emmanuel, 61410 Couterne (FR); BENESTEAU, Pascal, 53000 Laval (FR)
(74) Mandataire: SEB Développement

(56) Documents cités:
- EP-A1- 2 698 088
- WO-A1-2020/108313
- DE-A1-102012 110 239

## Description

La présente invention concerne de manière générale les appareils de préparation culinaire, et en particulier les appareils de préparation culinaire agencés pour chauffer et travailler automatiquement des aliments à préparer préalablement placés dans une cuve de travail par un utilisateur. Typiquement, l'invention concerne un robot ménager comprenant une cuve dans laquelle l'utilisateur place des ingrédients, pour ensuite la fermer avec un couvercle, et le robot ménager prépare ensuite automatiquement un plat prêt à être consommé, en chauffant et travaillant les ingrédients de la cuve de travail.

Il est connu dans l'art antérieur des robots ménagers, tel que celui présenté dans le document WO2014/026866 A1. En contrepartie, l'appareil de préparation culinaire divulgué dans ce document est complexe car il comporte un couvercle qui peut être bloqué sur la cuve de travail par des arbres longitudinaux ancrés dans un retour vertical de l'appareil de préparation culinaire. En conséquence, il faut prévoir un châssis complexe et robuste (qui forme donc un col de cygne), ce qui est coûteux, et volumineux. En conséquence, l'accès à la cuve de travail est limité par ces organes latéraux de blocage, et l'ergonomie d'utilisation s'en trouve limitée. Enfin, la commande des organes de blocage nécessite le fonctionnement d'un motoréducteur, ce qui est long et peut provoquer une attente de la part de l'utilisateur.

Par ailleurs, le document WO201912208 A1 divulgue un appareil de préparation culinaire comprenant un dispositif motorisé utilisé pour bloquer un couvercle sur une cuve de cuisson, après verrouillage par rotation du couvercle sur la cuve. Un inconvénient de la réalisation décrite dans ce document réside dans l'absence de solution pour sécuriser aussi la cuve de cuisson sur le boîtier, ce qui peut affecter la sécurité d'utilisation. Il faut par exemple prévoir un verrouillage manuel de la cuve ce qui augmente les coûts et la complexité d'utilisation. EP2698088A1 représente l'état de la technique le plus proche et divulgue le préambule de la revendication 1.

Un but de la présente invention est de répondre aux inconvénients de l'art antérieur mentionnés ci-dessus et en particulier, tout d'abord, de proposer un appareil de préparation culinaire (un robot ménager) avec une structure simple et facile à utiliser tout en garantissant la sécurité de l'utilisateur, même si des aliments chauds se trouvent dans la cuve.

Pour cela un premier aspect de l'invention concerne un appareil de préparation culinaire comprenant :
- un boîtier,
- une cuve montée de manière amovible sur le boîtier et agencée pour recevoir des aliments à préparer,
- au moins un organe mobile de travail disposé dans la cuve et agencé pour travailler les aliments reçus dans la cuve,
- un moteur disposé dans le boîtier et agencé pour mettre en mouvement l'organe mobile de travail,
- un couvercle amovible monté de manière amovible dans une position de fermeture de sorte à conférer à la cuve un état fermé dans lequel la cuve est fermée par le couvercle,
dans lequel l'appareil de préparation culinaire comprend des moyens de sécurisation du verrouillage du couvercle, lesdits moyens de sécurisation du verrouillage comportant :
- un premier organe de blocage mobile selon une première direction de déplacement, entre une position de non-sécurisation du couvercle, dans laquelle un mouvement d'ouverture du couvercle depuis la position de fermeture est autorisé, et une position de sécurisation du couvercle, dans laquelle le premier organe de blocage entrave le mouvement d'ouverture du couvercle depuis la position de fermeture,
- un motoréducteur agencé pour déplacer le premier organe de blocage selon la première direction de déplacement entre la position de non-sécurisation du couvercle et la position de sécurisation du couvercle,
caractérisé:
- en ce que les moyens de sécurisation du verrouillage comprennent un deuxième organe de blocage mobile selon une deuxième direction de déplacement, entre une position de non-sécurisation de la cuve, dans laquelle un démontage de la cuve montée sur le boîtier est autorisé, et une position de sécurisation de la cuve, dans laquelle le deuxième organe de blocage entrave le démontage de la cuve montée sur le boîtier,
- et en ce que le motoréducteur est agencé pour déplacer le deuxième organe de blocage selon la deuxième direction de déplacement entre la position de non-sécurisation de la cuve et la position de sécurisation de la cuve.

Selon la mise en oeuvre ci-dessus, les moyens de sécurisation du verrouillage comprennent un premier organe de blocage agencé pour bloquer le couvercle en position fermée, et un deuxième organe de blocage agencé pour bloquer la cuve montée sur l'appareil. Ainsi, un seul et même motoréducteur peut commander les deux organes de blocage simultanément, de sorte que l'appareil de préparation culinaire reste simple, mais procure une sécurisation du verrouillage du couvercle et un verrouillage de la cuve. Il faut noter que les organes de blocage sont déplacés par le motoréducteur, ce qui procure une sécurisation du verrouillage pilotée qui peut être effectuée sous conditions particulières d'utilisation : ce système est flexible, et ne requiert pas d'intervention ou manipulation de l'utilisateur : l'ergonomie d'utilisation n'est pas affectée.

Autrement dit, les moyens de sécurisation du verrouillage comprennent une ligne ou une chaine de transmission qui relie le motoréducteur au premier et au deuxième organe de blocage pour leur imposer un déplacement.

Avantageusement, les moyens de sécurisation du verrouillage comprennent au moins un dispositif de liaison agencé entre le motoréducteur et le deuxième organe de blocage. Un tel dispositif de liaison permet de procurer une première direction de déplacement différente de la deuxième direction de déplacement sans requérir un deuxième motoréducteur. L'encombrement reste donc limité, et la liberté de conception est accrue.

Avantageusement, le dispositif de liaison comprend un dispositif à renvoi d'angle.

Avantageusement, le dispositif de liaison comprend un dispositif à came.

Avantageusement, le dispositif de liaison comprend un dispositif à pignon-crémaillère.

Avantageusement, le dispositif de liaison comprend une bielle.

Avantageusement, le motoréducteur est agencé pour être piloté entre :
- une configuration de repos, dans laquelle le premier organe de blocage est en position de non-sécurisation du couvercle et le deuxième organe de blocage est en position de non-sécurisation de la cuve, et
- une configuration de fin de course, dans laquelle le premier organe de blocage est en position de sécurisation du couvercle et le deuxième organe de blocage est en position de sécurisation de la cuve,
et le motoréducteur est agencé pour pouvoir s'arrêter dans une configuration intermédiaire, dans laquelle :
- le premier organe de blocage est en position de non-sécurisation du couvercle et le deuxième organe de blocage est en position de sécurisation de la cuve.

Selon la mise en oeuvre ci-dessus, le motoréducteur présente trois positions d'arrêt. En configuration de repos du motoréducteur, aucun du premier ou du deuxième organe de blocage n'est engagé avec la cuve ou le couvercle, si bien que toutes les opérations de montage / démontage sont possibles. En configuration de fin de course du motoréducteur, le premier et le deuxième organe de blocage sont engagés respectivement avec le couvercle et la cuve, si bien que toutes les opérations de montage / démontage sont impossibles. On peut imaginer de mettre l'appareil dans cette configuration si un risque de débordement ou de blessure de l'utilisateur est envisageable, avec le couvercle alors impossible à démonter. De plus, il est prévu que le motoréducteur puisse être arrêté en configuration intermédiaire, dans laquelle seulement le deuxième organe de blocage est engagé avec la cuve, et le premier organe de blocage n'est pas engagé avec le couvercle. La cuve est donc impossible à démonter, mais le couvercle peut être retiré si besoin. On peut imaginer de mettre l'appareil dans cette configuration si aucun risque de débordement ou de blessure de l'utilisateur n'est identifié même avec le couvercle retiré, en fonction des conditions d'utilisation.

Avantageusement, l'appareil de préparation culinaire comprend une transmission entre le motoréducteur et une portion d'engagement du premier organe de blocage agencée pour s'engager dans une contre forme d'engagement du couvercle, et :
- il est prévu un jeu prédéterminé au niveau de la transmission ou entre la portion d'engagement du premier organe de blocage et la contre forme d'engagement du couvercle,
- la course du premier organe de blocage imposée par le motoréducteur entre la configuration de repos et la configuration intermédiaire est inférieure ou égale au jeu prédéterminé. Selon cette mise en oeuvre, le jeu prédéterminé est prévu au niveau de la transmission ou entre la portion d'engagement du premier organe de blocage et la contre forme d'engagement du couvercle, mais pas entre le motoréducteur et le deuxième organe de blocage. Ainsi, la course du motoréducteur entre configuration de repos et configuration intermédiaire déplace le deuxième organe de blocage vers la position de sécurisation de la cuve, et le jeu prédéterminé est comblé, si bien que le premier organe de blocage reste en position de non-sécurisation du couvercle. Ensuite, en configuration intermédiaire, le jeu prédéterminé étant comblé, la course du motoréducteur de la configuration intermédiaire vers la configuration de fin de course provoque le déplacement du premier organe de blocage vers la position de sécurisation du couvercle, le deuxième organe de blocage restant en position de sécurisation de la cuve.

Avantageusement, la cuve comprend une poignée, et :
- le premier organe de blocage s'étend hors de la poignée lorsque le premier organe de blocage occupe la position de sécurisation du couvercle et/ou
- le deuxième organe de blocage s'étend hors du boîtier lorsque le deuxième organe de blocage occupe la position de sécurisation de la cuve.

Les moyens de sécurisation du verrouillage sont logés en partie dans la poignée, ce qui permet de les cacher à l'utilisateur.

Avantageusement, les moyens de sécurisation du verrouillage comprennent une tige portant le premier organe de blocage et agencée pour être déplacée par le motoréducteur selon un mouvement de translation entre la position de sécurisation du couvercle et la position de non-sécurisation du couvercle, de préférence selon une liaison glissière.

Avantageusement, les moyens de sécurisation du verrouillage comprennent une crémaillère engagée avec le motoréducteur pour déplacer la tige.

Avantageusement, le dispositif de liaison est accouplé à la crémaillère. Cette mise en oeuvre permet de proposer un dispositif compact avec le dispositif de liaison au plus près du motoréducteur.

Avantageusement, la cuve porte un capot latéral s'étendant d'une partie inférieure à une partie supérieure de la cuve et la tige est logée principalement entre la cuve et le capot latéral.

Avantageusement, les moyens de sécurisation du verrouillage comprennent :
- un premier organe élastique, tel qu'un ressort, agencé pour repousser le premier organe de blocage de la position de sécurisation du couvercle à la position de non-sécurisation du couvercle, et/ou
- un deuxième organe élastique, tel qu'un ressort, agencé pour repousser le deuxième organe de blocage de la position de sécurisation de la cuve à la position de non-sécurisation de la cuve.

Avantageusement, la première direction de déplacement est différente de la deuxième direction de déplacement, et de préférence la première direction de déplacement est comprise dans un premier plan positionné à 90°±15° par rapport à un deuxième plan comprenant la deuxième direction de déplacement. La mise en oeuvre ci-dessus permet de sécuriser le verrouillage du couvercle et de la cuve, même si ces derniers n'ont pas des directions de montage similaires.

Avantageusement, l'appareil de préparation culinaire comprend des moyens de verrouillage du couvercle, agencés pour verrouiller le couvercle en position de fermeture, et agencés pour être commandés manuellement.

Avantageusement, les moyens de verrouillage du couvercle comprennent une interface de type baïonnette.

Avantageusement, l'appareil de préparation culinaire comprend des moyens de verrouillage de la cuve, agencés pour verrouiller sur le boîtier la cuve montée sur le boîtier, et agencés pour être commandés manuellement.

Avantageusement, les moyens de verrouillage de la cuve comprennent :
- au moins une patte de verrouillage agencée pour s'engager avec une contre-forme afin de verrouiller sur le boîtier la cuve montée sur le boîtier,
- un organe élastique de verrouillage agencé pour maintenir la patte de verrouillage engagée avec la contre forme,
- au moins levier de déverrouillage, agencé pour être commandé manuellement afin de dégager la patte de verrouillage de la contre forme.

Avantageusement, la cuve est agencée pour se monter en translation sur le boîtier selon une direction de montage de cuve, de préférence selon une direction axiale de la cuve, et la deuxième direction de déplacement du deuxième organe de blocage est perpendiculaire à la direction de montage de cuve. Le blocage est efficace.

Avantageusement, le couvercle est agencé pour se monter en rotation sur la cuve selon un axe de rotation de montage du couvercle, de préférence parallèle à une direction axiale de la cuve, et la première direction de déplacement du premier organe de blocage est parallèle à l'axe de rotation de montage du couvercle.

Avantageusement, le motoréducteur est agencé dans le boîtier, le motoréducteur comprend un bras de commande et le bras de commande comprend au moins une butée de fin de course prévue pour venir en butée avec le boîtier afin de définir la position non-sécurisation du couvercle du premier organe de blocage et/ou la position de sécurisation du couvercle du premier organe de blocage.

Avantageusement, le motoréducteur est agencé pour déplacer le premier organe de blocage de la position de sécurisation du couvercle à la position non-sécurisation du couvercle.

Avantageusement, l'appareil de préparation culinaire comprend un dispositif de chauffage agencé pour fournir une chaleur de cuisson aux aliments reçus dans la cuve.

### Description des figures

D'autres caractéristiques et avantages de la présente invention apparaîtront plus clairement à la lecture de la description détaillée qui suit de deux modes de réalisation de l'invention donnés à titre d'exemples nullement limitatifs et illustrés par les dessins annexés, dans lesquels :
[fig. 1] La figure 1 représente une vue éclatée en perspective d'un premier mode de réalisation d'un appareil de préparation culinaire selon la présente invention, comprenant notamment un boîtier, une cuve et un couvercle ;
[fig. 2] La figure 2 représente une coupe de l'appareil de la figure 1 dans un plan vertical, avec la cuve montée sur le boîtier et le couvercle fermant la cuve ;
[fig. 3] La figure 3 représente la coupe de la figure 2, avec un premier organe de blocage engagé avec le couvercle, et un deuxième organe de blocage engagé avec la cuve ;
[fig. 4a] La figure 4a représente une vue en perspective d'un motoréducteur agencé pour déplacer le premier organe de blocage et le deuxième organe de blocage ;
[fig. 4b] La figure 4b représente une autre vue en perspective du motoréducteur de la Fig. 4a ;
[fig. 5] La figure 5 représente en perspective une coupe partielle de l'appareil de préparation culinaire de la figure 1 ;
[fig. 6] La figure 6 représente une mise en oeuvre alternative du motoréducteur de la figure 4b pour procurer un deuxième mode de réalisation de l'invention ;
[fig. 7] La figure 7 représente le deuxième mode de réalisation selon la coupe de la figure 2, avec le motoréducteur de la figure 6 dans une configuration de repos ;
[fig. 8] La figure 8 représente le deuxième mode de réalisation de la coupe de la figure 7, avec le motoréducteur de la figure 6 dans une configuration intermédiaire, avec seulement le deuxième organe de blocage engagé avec la cuve ;
[fig. 9] La figure 9 représente le deuxième mode de réalisation de la coupe de la figure 7, avec le motoréducteur de la figure 6 dans une configuration de fin de course, avec le premier organe de blocage engagé avec le couvercle, et le deuxième organe de blocage engagé avec la cuve.

### Description détaillée de mode(s) de réalisation

### Premier mode de réalisation

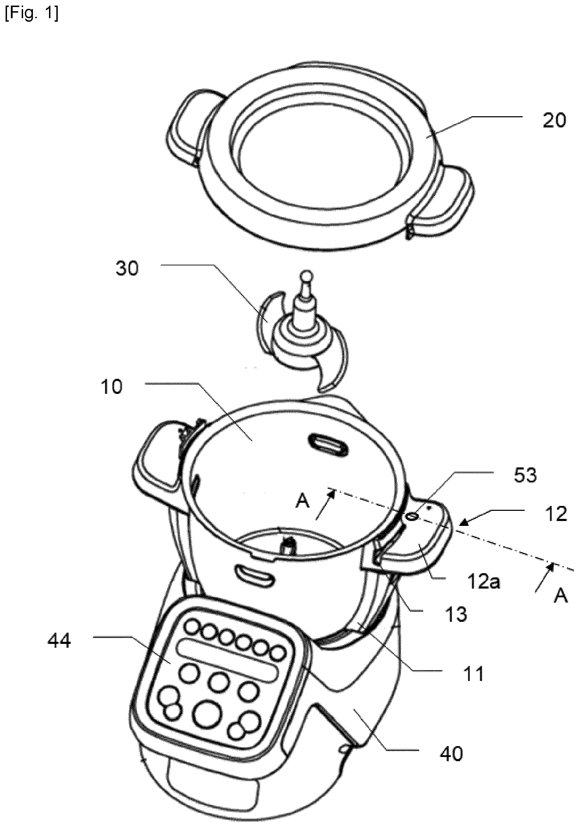

La figure 1 représente un premier mode de réalisation d'un appareil de préparation culinaire avec un boîtier 40, recevant de manière amovible une cuve 10 qui peut contenir un organe mobile de travail 30 et être fermée par un couvercle 20. La cuve 10 peut ici se monter selon un mouvement axial sur le boîtier 40. L'organe mobile de travail 30, ici un outil de découpe, est placé dans la cuve 10, et se trouve alors accouplé avec un moteur situé dans le boîtier 40, pour être entraîné en rotation, une fois la cuve 10 fermée avec le couvercle 20.

La cuve 10 présente deux extensions latérales 11 qui remontent le long de la cuve 10, et qui se terminent par deux poignées 12 au niveau de la partie supérieure de la cuve 10, et comprenant chacune une fente 13 ménagée sur une surface supérieure 12a. Le couvercle 20 est prévu pour se monter sur la cuve 10 suivant un mouvement de rotation (une liaison pivot est prévue), afin d'engager une partie mâle du couvercle 20 dans les fentes 13, en passant d'une position déverrouillée (couvercle 20 posé sur la cuve 10) vers une position de fermeture, verrouillée, dans laquelle le couvercle 20 est en position finale sur l'appareil de préparation culinaire. Ce système de verrouillage est par exemple un verrouillage à baïonnette.

En d'autres termes, le couvercle 20 en position déverrouillée ferme la cuve 10, et peut en être retiré librement, mais ne peut plus se soulever de la cuve 10 une fois qu'il a été déplacé/pivoté vers la position de fermeture, verrouillée, ce qui procure une sécurité d'utilisation lorsque l'organe mobile de travail 30 est en rotation dans la cuve 10. Les moyens de verrouillage à baïonnette évoqués ci-dessus peuvent être élastiques, c'est-à-dire que l'utilisateur fait passer un "cran" au couvercle 20 en montant le couvercle 20 pour qu'une patte flexible des moyens de verrouillage à baïonnette forme un obstacle à un retour en arrière lors de l'utilisation. Lorsque la préparation est terminée, l'utilisateur en tournant le couvercle 20 en sens inverse déverrouille les moyens de verrouillage à baïonnette, en forçant pour passer à nouveau le "cran", et peut retirer le couvercle 20 en finissant de le faire pivoter.

L'appareil de préparation culinaire peut aussi comprendre un dispositif de chauffage pour chauffer et/ou cuire des aliments à préparer, notamment un dispositif de chauffage par induction agencé dans le boîtier 40, ou encore une résistance électrique chauffante placée dans le boîtier 40, sur le boîtier 40, sous la cuve 10, autour de la cuve 10, ou dans la cuve 10.

L'appareil de la figure 1 comprend un panneau de commande 44 en partie avant du boîtier 40 pour permettre à un utilisateur de sélectionner un geste culinaire (typiquement une opération de préparation ou une température de cuisson) ou une recette de cuisine complète (une série de gestes culinaires étalés dans le temps).

L'appareil de préparation culinaire peut comprendre des moyens de détection (des capteurs de présence) qui indiquent que la cuve 10 est en place, et que le couvercle 20 est bien en position, avant de lancer la préparation, en chauffant et/ou travaillant les aliments à préparer.

D'une manière générale, lors d'une préparation, une vitesse de rotation de l'organe mobile de travail 30 peut être imposée dans une gamme de vitesse allant de 0 à 300 tours/min (300min-1), par paliers, de manière variable ou constante. Le moteur situé dans le boîtier 40 est avantageusement associé à un réducteur. Le dispositif de chauffage peut être choisi pour imposer aux aliments à préparer une température allant jusqu'à 130°C par exemple.

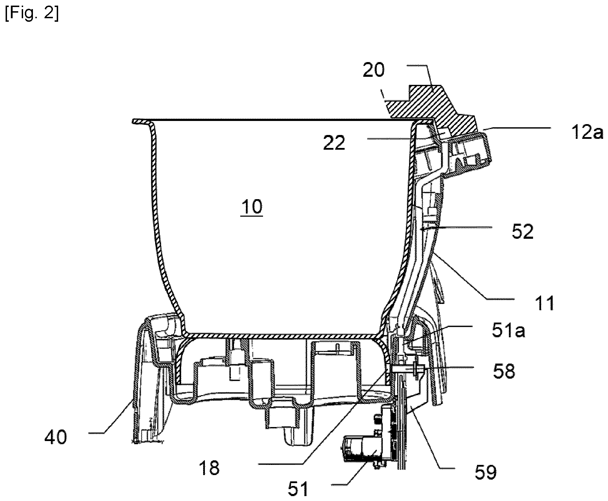

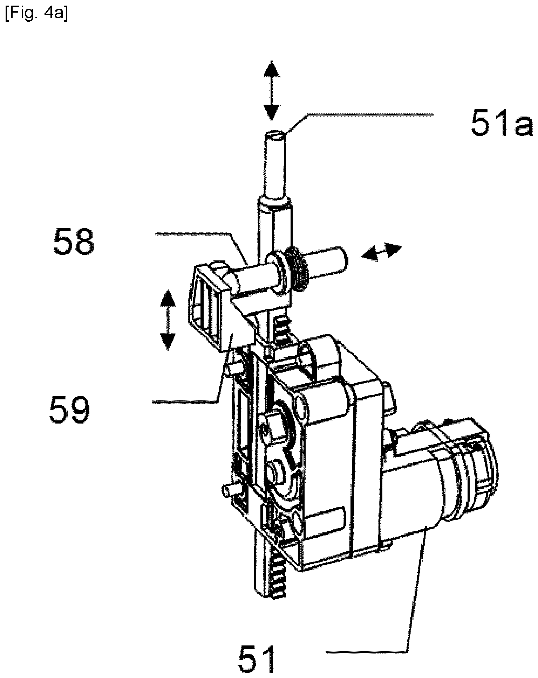

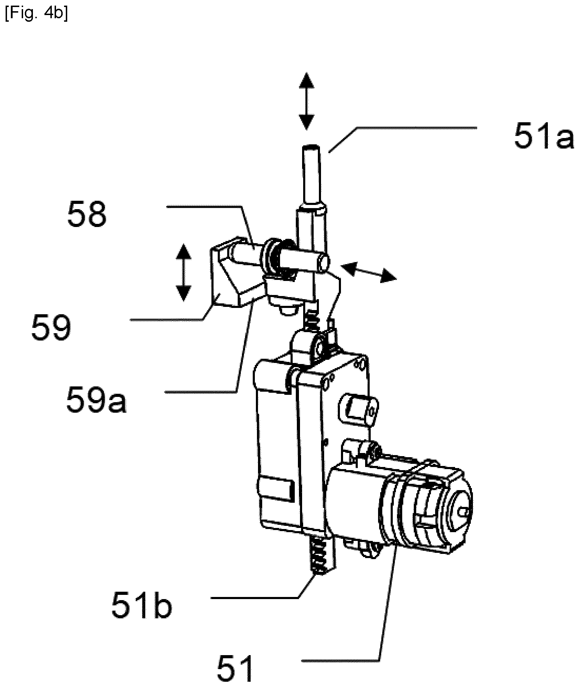

La figure 2 représente une coupe selon un plan vertical A-A de la figure 1 pour montrer des moyens de sécurisation du verrouillage qui comprennent notamment :
- une tige 52, logée dans une des extensions latérales 11 de la cuve 10, et montée en liaison glissière ;
- un premier organe de blocage 53 porté par la tige 52 et logé pour sa part dans la poignée 12, et sur la figure 2, le premier organe de blocage 53 est affleurant à la surface supérieure 12a,
- un deuxième organe de blocage 58, logé dans le boîtier 40, monté en liaison glissière, et, sur cette figure 2, le deuxième organe de blocage 58 est en regard d'un trou 18 de la cuve 10,
- un organe de renvoi, ici une came 59 agencée en regard du deuxième organe de blocage 58, à l'opposé du trou 18,
- un bras de commande 51a, qui porte la came 59, et dont l'extrémité supérieure affleure la paroi du boîtier 40 pour être directement en regard et quasiment en contact avec la partie inférieure de la tige 52,
- un motoréducteur 51 (visible aussi figures 4a et 4b), logé en partie inférieure du boîtier 40, sous la cuve 10,
- une crémaillère 51b (visible figures 4a et 4b) engagée avec le motoréducteur 51 et accouplée au bras de commande 51a pour le déplacer lorsque le motoréducteur 51 est piloté.

Les figures 4a et 4b montrent en détail l'agencement des moyens de sécurisation du verrouillage au niveau du motoréducteur 51. La crémaillère 51b, engagée avec le motoréducteur 51, est solidaire du bras de commande 51a qui peut donc se déplacer en translation. La came 59 est embarquée sur le bras de commande 51a, si bien qu'elle suit le mouvement de ce dernier. En conséquence, le deuxième organe de blocage 58, en contact avec la piste de came 59a de la came 59 peut se déplacer selon une direction perpendiculaire à la direction de déplacement du bras de commande 51a (dans un plan vertical).

Un ressort, non représenté, est prévu pour pousser constamment le deuxième organe de blocage 58 contre la piste de came 59a et le ramener en position de non-sécurisation de la cuve 10. De retour à la figure 2, un ressort non représenté est également prévu pour pousser constamment la tige 52 contre le bras de commande 51a et ramener en conséquence le premier organe de blocage 53 en position de non-sécurisation du couvercle 20.

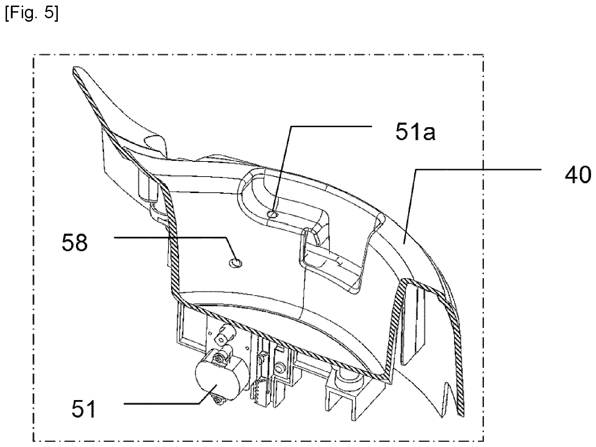

La figure 5 montre une coupe partielle du boîtier 40, sans la cuve 10, de sorte à représente les orifices dans le boîtier 40 d'où sortent le deuxième organe de blocage 58, et le bras de commande 51a.

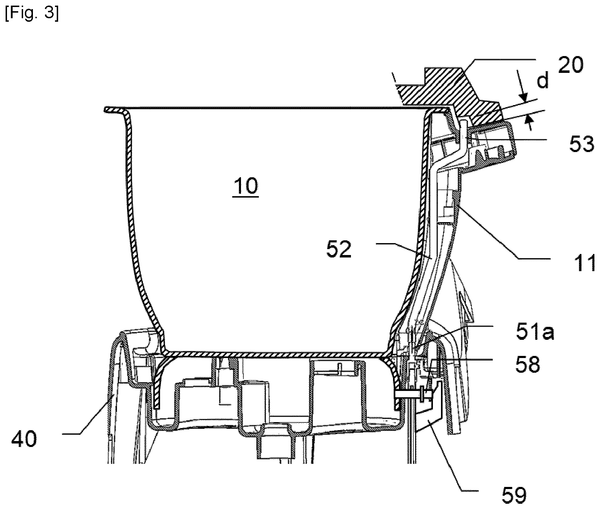

Le motoréducteur 51 est donc agencé pour déplacer le premier organe de blocage 53 et le deuxième organe de blocage 58. A cet effet, il peut être piloté entre une configuration de repos (figure 2), et une configuration de fin de course (figure 3).

En ce qui concerne le premier organe de blocage 53, ce dernier est mobile selon une première direction de déplacement (une direction verticale, celle de la tige 52), entre une position de non-sécurisation du couvercle 20, dans laquelle un mouvement d'ouverture du couvercle 20 depuis la position de fermeture est autorisé, et une position de sécurisation du couvercle 20, dans laquelle le premier organe de blocage 53 entrave le mouvement d'ouverture du couvercle 20 depuis la position de fermeture.

Le couvercle 20 comprend une contre forme d'engagement 22 pour accueillir l'extrémité (une portion d'engagement) du premier organe de blocage 53 lorsqu'il est en position de sécurisation du couvercle 20, de sorte à bloquer un mouvement de déverrouillage du couvercle 20.

En ce qui concerne le deuxième organe de blocage 58, celui-ci est mobile, sous l'effet de la came 59) selon une deuxième direction de déplacement (une direction horizontale sur la figure 2), entre une position de non-sécurisation de la cuve 10, dans laquelle un démontage de la cuve 10 montée sur le boîtier 40 est autorisé, et une position de sécurisation de la cuve 10, dans laquelle le deuxième organe de blocage 58 entrave le démontage de la cuve 10 montée sur le boîtier 40. A titre d'exemple, le deuxième organe de blocage 58 est monté sur le boîtier 40 selon une liaison glissière ou une liaison pivot glissant.

La cuve 10 comprend un trou 18 pour accueillir l'extrémité (une portion d'engagement) du deuxième organe de blocage 58 lorsqu'il est en position de sécurisation de la cuve 10, de sorte à bloquer un mouvement de démontage / déverrouillage de la cuve 10.

La figure 2 montre donc l'appareil de préparation culinaire avec le premier organe de blocage 53 en position de non-sécurisation du couvercle 20, et le deuxième organe de blocage 58 en position de non-sécurisation de la cuve 10. En conséquence, la cuve 10 et le couvercle 20 peuvent être montés ou démontés librement par l'utilisateur, car aucun mouvement n'est entravé par le premier organe de blocage 53 ou le deuxième organe de blocage 58, le motoréducteur 51 ayant été piloté pour être dans une configuration de repos.

La figure 3 montre l'appareil de préparation culinaire avec le premier organe de blocage 53 en position de sécurisation du couvercle 20, et le deuxième organe de blocage 58 en position de sécurisation de la cuve 10. En effet, le motoréducteur 51 a été piloté pour aller dans une configuration de fin de course, si bien qu'il a déplacé la crémaillère 51b, le bras de commande 51a et la tige 52 selon une translation vers le haut et d'une distance d, si bien que :
- la came 59 embarquée sur la bras de commande 51a a poussé horizontalement le deuxième organe de blocage 58 en position de sécurisation de la cuve 10, pour aller dans le trou 18 de la cuve 10 ;
- la tige 52 a déplacé le premier organe de blocage 53 en position de sécurisation du couvercle 20, pour aller dans la contre forme d'engagement 22 du couvercle 20.

En conséquence, la cuve 10 et le couvercle 20 ne peuvent plus être démontés / déverrouillés librement par l'utilisateur, car ces mouvements de démontage / déverrouillage sont entravés par le premier organe de blocage 53 et le deuxième organe de blocage 58, le motoréducteur 51 étant alors dans la configuration de fin de course.

Lors de l'utilisation de l'appareil, une fois la cuve 10 montée et le couvercle 20 monté et verrouillé au-dessus de l'outil de travail 30 et des aliments à préparer, l'utilisateur peut mettre l'appareil en fonctionnement. En conséquence, pour sécuriser ce fonctionnement, l'appareil de préparation culinaire pilote le motoréducteur 51 pour simultanément verrouiller la cuve 10 et sécuriser le verrouillage du couvercle 20, comme décrit ci-dessus.

Il est à noter qu'un seul motoréducteur est nécessaire pour effectuer cette mise en sécurité de l'appareil de préparation culinaire, tant au niveau du verrouillage de la cuve 10 que de la sécurisation du verrouillage du couvercle 20. Le renvoi d'angle, la came 59, permet d'imposer des mouvements selon des directions différentes au premier organe de blocage 53 et au deuxième organe de blocage 58, pour procurer une sécurisation efficace et adaptée à la cuve 10 et au couvercle 20, malgré leur spécificité de montage sur l'appareil de préparation culinaire.

En effet, le mouvement du premier organe de blocage 53 est perpendiculaire au déplacement de la contre forme d'engagement 22 lors du déverrouillage du couvercle 20, et le mouvement du deuxième organe de blocage 58 est également perpendiculaire au mouvement du trou 18 lors du démontage de la cuve 10. Le blocage de la cuve 10 et du couvercle 20 est donc efficace.

L'exemple représenté montre une came 59 pour procurer ces deux directions de déplacement différentes entre le premier organe de blocage 53 et le deuxième organe de blocage 58. Cependant, on peut envisager une bielle, une double crémaillère...

### Deuxième mode de réalisation

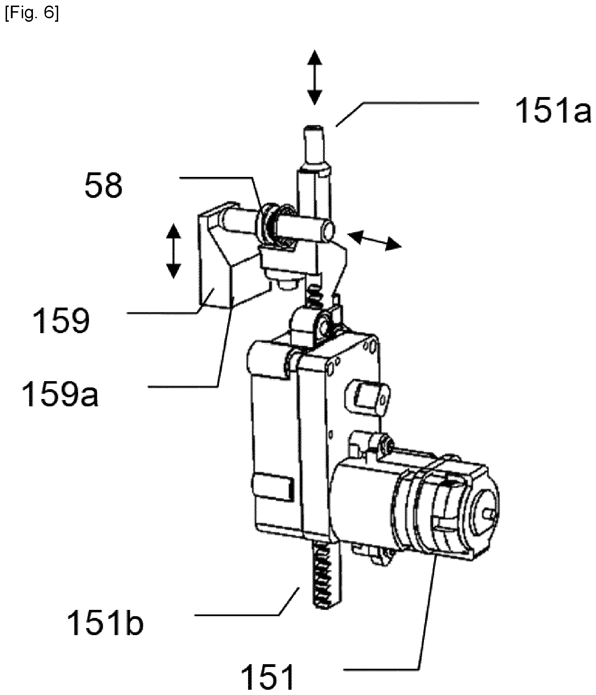

La figure 6 représente une deuxième mise en oeuvre dans laquelle il est prévu de pouvoir dissocier le verrouillage de la cuve 10 et la sécurisation du verrouillage du couvercle 20. En effet, il peut être intéressant de permettre, dans certaines conditions, de pouvoir déverrouiller et démonter le couvercle 20, sans pour autant déverrouiller / démonter la cuve 10, pour ajouter des ingrédients par exemple. Cependant, dans certaines conditions, il faut garantir que le couvercle 20 ne puisse pas être déverrouillé / démonté, en cas de risque d'ébullition / débordement par exemple. Il peut donc être avantageux de permettre un déverrouillage / démontage du couvercle 20 seul, sous conditions.

A cet effet, la figure 6 montre quelques modifications des moyens de sécurisation du verrouillage effectuées au niveau du motoréducteur 151, par rapport au premier mode de réalisation des figures 4a et 4b. En particulier :
- la crémaillère 151b est plus longue que dans le premier mode de réalisation ;
- la piste de came 159a de la came 159 présente une portion de fin de course plus longue que dans le premier mode de réalisation ;

- le bras de commande 151a est plus court que dans le premier mode de réalisation ;
- le motoréducteur 151 est prévu pour pouvoir être piloté de la configuration de repos à la configuration de fin de course, mais aussi pour pouvoir s'arrêter dans une configuration intermédiaire.

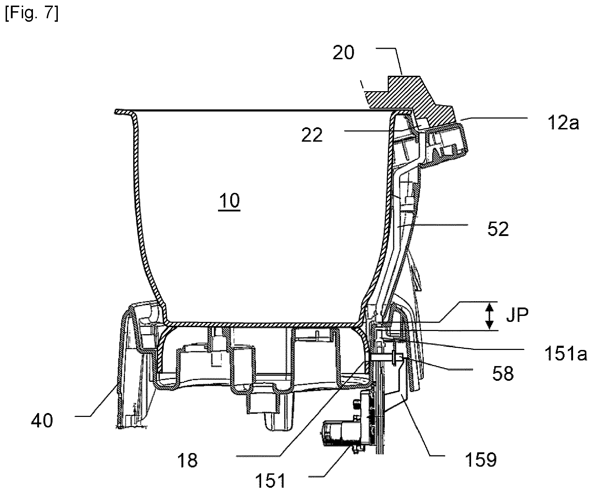

Comme expliqué ci-dessus, le bras de commande 151a est plus court que le bras de commande 51a du premier mode de réalisation. Comme le montre la figure 7 avec le motoréducteur 151 en configuration de repos, il existe alors un jeu prédéterminé JP entre le bras de commande 151a et la tige 52. Sur la figure 7, avec le motoréducteur 151 en configuration de repos, le premier organe de blocage 53 est en position de non-sécurisation du couvercle 20, et le deuxième organe de blocage 58 est en position de non-sécurisation de la cuve 10. En conséquence, la cuve 10 et le couvercle 20 peuvent être montés ou démontés librement par l'utilisateur, car aucun mouvement n'est entravé par le premier organe de blocage 53 ou le deuxième organe de blocage 58.

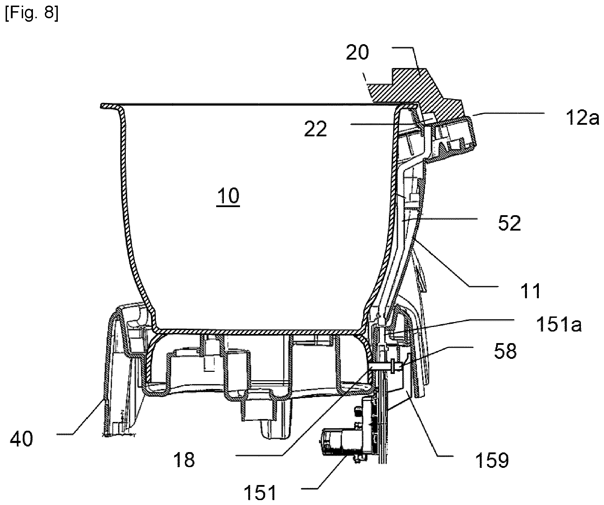

La figure 8 montre l'appareil de préparation culinaire de la figure 7, où le motoréducteur 151 a été piloté pour aller dans la configuration intermédiaire. Le bras de commande 151a a été déplacé vers le haut d'une course inférieure ou égale au jeu prédéterminé JP, et la came 159, embarquée sur le bras de commande 151a, a poussé le deuxième organe de blocage 58 en position de sécurisation de la cuve 10. Cependant, le bras de commande 151a n'a pas déplacé la tige 52, si bien que le premier organe de blocage 53 reste en position de non-sécurisation du couvercle 20. En conséquence, la cuve 10 ne peut plus être démontée librement par l'utilisateur, car un tel mouvement est entravé par le deuxième organe de blocage 58. Toutefois, le couvercle 20 peut toujours être monté ou démonté librement par l'utilisateur, car aucun mouvement n'est entravé par le premier organe de blocage 53.

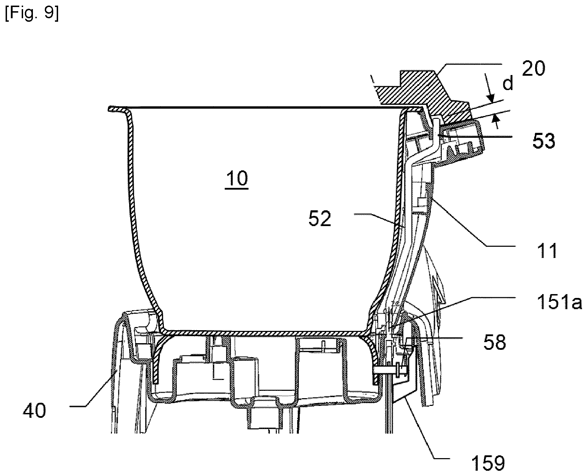

La figure 9 montre l'appareil de préparation culinaire de la figure 7, où le motoréducteur 151 a été piloté pour aller dans la configuration de fin de course. Le bras de commande 151a a encore été déplacé vers le haut cette fois d'une course totale supérieure au jeu prédéterminé JP. La came 159, embarquée sur le bras de commande 151a, continue de pousser le deuxième organe de blocage 58 en position de sécurisation de la cuve 10. Cependant, le bras de commande 151a a déplacé la tige 52, si bien que le premier organe de blocage 53 est maintenant en position de sécurisation du couvercle 20 (voir la distance d). En conséquence, la cuve 10 et le couvercle 20 ne peuvent plus être démontés librement par l'utilisateur, car de tels mouvements sont entravés par le premier organe de blocage 53 et le deuxième organe de blocage 58.

En résumé, la figure 9 montre les moyens de sécurisation du verrouillage de l'appareil de préparation culinaire dans une configuration sécurisée dans laquelle ni le couvercle 20, ni la cuve 10 ne peuvent être démontés, la figure 8 montre les moyens de sécurisation du verrouillage de l'appareil de préparation culinaire dans une configuration de sécurisation partielle dans laquelle seul le couvercle 20 peut être démonté, et la figure 7 montre les moyens de sécurisation du verrouillage de l'appareil de préparation culinaire dans une configuration de démontage libre dans laquelle tout démontage est autorisé. Il est possible de faire passer l'appareil de préparation culinaire de l'une à l'autre configuration sous certaines conditions, notamment en fonction des étapes de recette et de l'état des aliments dans la cuve 10.

La solution exposée ici se base sur un jeu prédéterminé JP dans la transmission entre le motoréducteur 151 et le premier organe de blocage 53. Cependant, on peut alternativement raccourcir le premier organe de blocage 53, pour prévoir, dans la configuration de démontage libre, un jeu entre le premier organe de blocage 53 et la surface supérieure 12a de la poignée 12. Ainsi, en configuration de démontage libre, le premier organe de blocage 53 est en retrait significatif de la surface supérieure 12a ; en configuration de sécurisation partielle, le premier organe de blocage 53 est affleurant avec la surface supérieure 12a ; en configuration sécurisée, le premier organe de blocage 53 est en saillie par rapport à la surface supérieure 12a et peut s'engager avec le couvercle 20.

A titre d'exemple nullement limitatif, on peut tout d'abord prévoir d'imposer aux moyens de sécurisation du verrouillage de l'appareil de préparation culinaire de passer en configuration de sécurisation partielle de la figure 8 dès que la cuve 10 est détectée en position montée, automatiquement, ou après confirmation de l'utilisateur.

A titre d'exemple nullement limitatif, on peut ensuite prévoir d'imposer aux moyens de sécurisation du verrouillage de l'appareil de préparation culinaire la configuration sécurisée de la figure 9 seulement si au cours du cycle de préparation, la vitesse de rotation de l'organe mobile de travail 30 est (ou a été) supérieure à une vitesse prédéterminée, et si la température des aliments à préparer est (ou a été) supérieure à une température prédéterminée. On peut aussi prévoir un maintien de cet état pendant une temporisation de repos prédéterminée.

L'utilisateur doit alors attendre la fin de la temporisation de repos avant de pouvoir ouvrir le couvercle 20. Si ces deux conditions n'ont pas été remplies simultanément, le passage des moyens de sécurisation du verrouillage de la configuration sécurisée de la figure 9 à la configuration intermédiaire de la figure 8 ou celle de repos de la figure 7 est simultanée à l'arrêt de l'appareil de préparation culinaire et l'utilisateur peut ouvrir immédiatement le couvercle 20.

En d'autres termes, selon cette variante le blocage du couvercle 20 en position verrouillée est systématique, et le déblocage est effectué soit immédiatement ou simultanément à l'arrêt de l'appareil de préparation culinaire si aucun risque de débordement n'est identifié, soit retardé, si un risque de débordement est identifié (température prédéterminée dépassée et vitesse prédéterminée dépassée). Autrement dit, les moyens de sécurisation du verrouillage sont désactivés sous condition.

Selon une deuxième variante de ce procédé, on peut procéder au blocage du couvercle 20 en position verrouillée seulement si les deux conditions sont programmées (c'est-à-dire au démarrage de l'appareil de préparation culinaire, par exemple simultanément au démarrage du mouvement de l'organe mobile de travail ou même après, mais avant que la vitesse dépasse la vitesse prédéterminée et que la température dépasse la température prédéterminée), ou dès que ces deux conditions sont mesurées par l'appareil de préparation culinaire (en cours de programme). On peut alors maintenir les moyens de sécurisation du verrouillage activés en configuration sécurisée pendant toute l'utilisation ultérieure de l'appareil de préparation culinaire, et pendant une temporisation de repos (au moins cinq secondes, et préférentiellement au moins huit ou dix secondes), après arrêt complet de l'organe mobile de travail et/ou du chauffage. Ainsi l'ouverture du couvercle 20 est impossible uniquement lorsqu'un risque de débordement existe.

En d'autres termes, selon cette variante, les moyens de sécurisation du verrouillage ne sont passés en configuration sécurisée de la figure 9 au démarrage ou pendant l'utilisation que s'il est prévu ou mesuré de dépasser la vitesse prédéterminée et la température prédéterminée au cours du cycle à venir, et le blocage est maintenu un court instant même après l'arrêt complet de l'appareil de préparation culinaire. On peut prévoir sur le panneau de commande 44 d'informer l'utilisateur si l'ouverture est possible ou non. Autrement dit, les moyens de sécurisation du verrouillage sont activés sous condition.

L'appareil de préparation culinaire comprend donc une unité de commande et des moyens de mesure ou d'acquisition de la température, et des moyens de mesure ou d'acquisition de la vitesse de l'organe mobile de travail 30.

On peut utiliser la température des moyens de chauffage, la température de la cuve 10, ou la température des aliments à préparer situés dans la cuve 10. La température prédéterminée peut être 50°C ou préférentiellement 60°C.

En ce qui concerne la vitesse de l'organe mobile de travail 30, on peut choisir de considérer qu'il faut passer les moyens de sécurisation du verrouillage en configuration sécurisée (si la température prédéterminée est dépassée), dès qu'une gamme de vitesse est choisie ou mesurée (par exemple le dernier palier de plusieurs paliers de vitesse préprogrammés), ou dès que la vitesse choisie ou mesurée excède une valeur particulière, par exemple 160 tours/min ou plus préférentiellement 250 tours/min.

Ainsi en bloquant le couvercle 20 en position verrouillée pendant la temporisation de repos, après arrêt de l'agitation et du chauffage des aliments, dès que la vitesse excède la vitesse prédéterminée simultanément à un dépassement de la température prédéterminée, l'ouverture est impossible tant qu'il existe un risque de débordement et/ou ébullition intempestifs.

On peut alors envisager d'imposer aux moyens de sécurisation du verrouillage :
- le passage en configuration de sécurisation partielle pour enlever seulement le couvercle 20 si la recette demande par exemple un ajout d'ingrédients, ou un assaisonnement,
- le passage en configuration de démontage libre pour démonter également la cuve 10 (ou l'ensemble cuve 10 - couvercle 20), si la recette est terminée. On comprendra que diverses modifications et/ou améliorations évidentes pour l'homme du métier peuvent être apportées aux différents modes de réalisation de l'invention décrits dans la présente description sans sortir du cadre de l'invention tel que défini par les revendications.

## Revendications

1. Appareil de préparation culinaire comprenant :
- un boîtier (40),
- une cuve (10) montée de manière amovible sur le boîtier (40) et agencée pour recevoir des aliments à préparer,
- au moins un organe mobile de travail (30) disposé dans la cuve (10) et agencé pour travailler les aliments reçus dans la cuve (10),
- un moteur disposé dans le boîtier (40) et agencé pour mettre en mouvement l'organe mobile de travail (30),
- un couvercle (20) amovible monté de manière amovible dans une position de fermeture de sorte à conférer à la cuve (10) un état fermé dans lequel la cuve (10) est fermée par le couvercle (20),
dans lequel l'appareil de préparation culinaire comprend des moyens de sécurisation du verrouillage du couvercle (20), lesdits moyens de sécurisation du verrouillage comportant :
• un premier organe de blocage (53) mobile selon une première direction de déplacement, entre une position de non-sécurisation du couvercle (20), dans laquelle un mouvement d'ouverture du couvercle (20) depuis la position de fermeture est autorisé, et une position de sécurisation du couvercle (20), dans laquelle le premier organe de blocage (53) entrave le mouvement d'ouverture du couvercle (20) depuis la position de fermeture,
• un motoréducteur (51 ; 151) agencé pour déplacer le premier organe de blocage (53) selon la première direction de déplacement entre la position de non-sécurisation du couvercle (20) et la position de sécurisation du couvercle (20),
**caractérisé:**
- **en ce que** les moyens de sécurisation du verrouillage comprennent un deuxième organe de blocage (58) mobile selon une deuxième direction de déplacement, entre une position de non-sécurisation de la cuve (10), dans laquelle un démontage de la cuve (10) montée sur le boîtier (40) est autorisé, et une position de sécurisation de la cuve (10), dans laquelle le deuxième organe de blocage (58) entrave le démontage de la cuve (10) montée sur le boîtier (40),
- et **en ce que** le motoréducteur (51 ; 151) est agencé pour déplacer le deuxième organe de blocage (58) selon la deuxième direction de déplacement entre la position de non-sécurisation de la cuve (10) et la position de sécurisation de la cuve (10).

2. Appareil de préparation culinaire, selon la revendication 1, **caractérisé en ce que** les moyens de sécurisation du verrouillage comprennent au moins un dispositif de liaison agencé entre le motoréducteur (51 ; 151) et le deuxième organe de blocage (58).

3. Appareil de préparation culinaire, selon la revendication 2, **caractérisé en ce que** le dispositif de liaison comprend un dispositif à renvoi d'angle.

4. Appareil de préparation culinaire, selon la revendication 2 ou 3, **caractérisé en ce que** le dispositif de liaison comprend un dispositif à came (59).

5. Appareil de préparation culinaire selon l'une des revendications 1 à 4, dans lequel le motoréducteur (51 ; 151) est agencé pour être piloté entre :
- une configuration de repos, dans laquelle le premier organe de blocage (53) est en position de non-sécurisation du couvercle (20) et le deuxième organe de blocage (58) est en position de non-sécurisation de la cuve (10), et
- une configuration de fin de course, dans laquelle le premier organe de blocage (53) est en position de sécurisation du couvercle (20) et le deuxième organe de blocage (58) est en position de sécurisation de la cuve (10), **caractérisé en ce que** le motoréducteur (51 ; 151) est agencé pour pouvoir s'arrêter dans une configuration intermédiaire, dans laquelle :
- le premier organe de blocage (53) est en position de non-sécurisation du couvercle (20) et le deuxième organe de blocage (58) est en position de sécurisation de la cuve (10).

6. Appareil de préparation culinaire selon la revendication 5, comprenant une transmission entre le motoréducteur (51 ; 151) et une portion d'engagement du premier organe de blocage (53) agencée pour s'engager dans une contre forme d'engagement (22) du couvercle (20), **caractérisé :**
- **en ce qu'**il est prévu un jeu prédéterminé (JP) au niveau de la transmission ou entre la portion d'engagement du premier organe de blocage (53) et la contre forme d'engagement (22) du couvercle (20),
- **en ce que** la course du premier organe de blocage (53) imposée par le motoréducteur (51 ; 151) entre la configuration de repos et la configuration intermédiaire est inférieure ou égale au jeu prédéterminé (JP).

7. Appareil de préparation culinaire selon l'une des revendications 1 à 6, dans lequel la cuve (10) comprend une poignée (12), **caractérisé en ce que** :
- le premier organe de blocage (53) s'étend hors de la poignée (12) lorsque le premier organe de blocage (53) occupe la position de sécurisation du couvercle (20) et/ou
- le deuxième organe de blocage (58) s'étend hors du boîtier (40) lorsque le deuxième organe de blocage (58) occupe la position de sécurisation de la cuve (10).

8. Appareil de préparation culinaire selon l'une des revendications 1 à 7, **caractérisé en ce que** les moyens de sécurisation du verrouillage comprennent une tige (12) portant le premier organe de blocage (53) et agencée pour être déplacée par le motoréducteur (51 ; 151) selon un mouvement de translation entre la position de sécurisation du couvercle (20) et la position de non-sécurisation du couvercle (20), de préférence selon une liaison glissière.

9. Appareil de préparation culinaire selon la revendication 8, **caractérisé en ce que** les moyens de sécurisation du verrouillage comprennent une crémaillère (51b ; 151b) engagée avec le motoréducteur (51 ; 151) pour déplacer la tige (12).

10. Appareil de préparation culinaire selon la revendication 9, dans sa dépendance à l'une des revendications 2 à 6, **caractérisé en ce que** le dispositif de liaison est accouplé à la crémaillère (51b ; 151b).

11. Appareil de préparation culinaire, selon l'une des revendications 1 à 10, **caractérisé en ce que** les moyens de sécurisation du verrouillage comprennent :
- un premier organe élastique, tel qu'un ressort, agencé pour repousser le premier organe de blocage (53) de la position de sécurisation du couvercle (20) à la position de non-sécurisation du couvercle (20), et/ou
- un deuxième organe élastique, tel qu'un ressort, agencé pour repousser le deuxième organe de blocage (58) de la position de sécurisation de la cuve (10) à la position de non-sécurisation de la cuve (10).

12. Appareil de préparation culinaire, selon l'une des revendications 1 à 11, **caractérisé en ce que** la première direction de déplacement est différente de la deuxième direction de déplacement, et de préférence dans lequel la première direction de déplacement est comprise dans un premier plan positionné à 90°±15° par rapport à un deuxième plan comprenant la deuxième direction de déplacement.

13. Appareil de préparation culinaire selon l'une des revendications 1 à 12, **caractérisé en ce qu'**il comprend des moyens de verrouillage du couvercle (20), agencés pour verrouiller le couvercle (20) en position de fermeture, et agencés pour être commandés manuellement.

14. Appareil de préparation culinaire selon l'une des revendications 1 à 13, **caractérisé en ce que** la cuve (10) est agencée pour se monter en translation sur le boîtier (40) selon une direction de montage de cuve (10), de préférence selon une direction axiale de la cuve (10), et dans lequel la deuxième direction de déplacement du deuxième organe de blocage (58) est perpendiculaire à la direction de montage de cuve (10).

15. Appareil de préparation culinaire selon l'une des revendications 1 à 14, **caractérisé en ce que** le couvercle (20) est agencé pour se monter en rotation sur la cuve (10) selon un axe de rotation de montage du couvercle (20), de préférence parallèle à une direction axiale de la cuve (10) amovible, et dans lequel la première direction de déplacement du premier organe de blocage (53) est parallèle à l'axe de rotation de montage du couvercle (20).

16. Appareil de préparation culinaire selon l'une des revendications 1 à 15, **caractérisé en ce qu'**il comprend un dispositif de chauffage agencé pour fournir une chaleur de cuisson aux aliments reçus dans la cuve (10).

## Patentansprüche

1. Gerät zur Essenszubereitung, umfassend:
- ein Gehäuse (40),
- einen Behälter (10), der abnehmbar am Gehäuse (40) angebracht und so eingerichtet ist, dass er zuzubereitende Lebensmittel aufnehmen kann,
- mindestens ein bewegliches Arbeitsorgan (30), das im Behälter (10) angeordnet und so eingerichtet ist, dass es die im Behälter (10) aufgenommenen Lebensmittel bearbeiten kann,
- einen Motor, der im Gehäuse (40) angeordnet und so eingerichtet ist, dass er das bewegliche Arbeitsorgan (30) in Bewegung setzen kann,
- einen abnehmbaren Deckel (20), der abnehmbar in einer Verschlussstellung angebracht ist, sodass er dem Behälter (10) einen geschlossenen Zustand verleiht, in dem der Behälter (10) vom Deckel (20) geschlossen wird, wobei das Gerät zur Essenszubereitung Mittel zum Sichern der Verriegelung des Deckels (20) umfasst, wobei die Mittel zum Sichern der Verriegelung umfassen:
• ein erstes Sperrorgan (53), das in einer ersten Bewegungsrichtung zwischen einer Stellung zur Nichtsicherung des Deckels (20), in der eine Bewegung zum Öffnen des Deckels (20) aus der Verschlussstellung heraus möglich ist, und einer Stellung zur Sicherung des Deckels (20), in der das erste Sperrorgan (53) die Bewegung zum Öffnen des Deckels (20) aus der Verschlussstellung heraus behindert, beweglich ist,
• einen Getriebemotor (51; 151), der so eingerichtet ist, dass er das erste Sperrorgan (53) in der ersten Bewegungsrichtung zwischen der Stellung zur Nichtsicherung des Deckels (20) und der Stellung zur Sicherung des Deckels (20) bewegen kann,
**dadurch gekennzeichnet:**
- **dass** die Mittel zum Sichern der Verriegelung ein zweites Sperrorgan (58) umfassen, das in einer zweiten Bewegungsrichtung zwischen einer Stellung zur Nichtsicherung des Behälters (10), in der ein Ausbauen des am Gehäuse (40) angebrachten Behälters (10) möglich ist, und einer Stellung zur Sicherung des Behälters (10), in der das zweite Sperrorgan (58) das Ausbauen des am Gehäuse (40) angebrachten Behälters (10) behindert, beweglich ist,
- und **dass** der Getriebemotor (51; 151) so eingerichtet ist, dass er das zweite Sperrorgan (58) in der zweiten Bewegungsrichtung zwischen der Stellung zur Nichtsicherung des Behälters (10) und der Stellung zur Sicherung des Behälters (10) bewegen kann.

2. Gerät zur Essenszubereitung nach Anspruch 1, **dadurch gekennzeichnet, dass** die Mittel zum Sichern der Verriegelung mindestens eine Verbindungsvorrichtung umfassen, die zwischen dem Getriebemotor (51; 151) und dem zweiten Sperrorgan (58) eingerichtet ist.

3. Gerät zur Essenszubereitung nach Anspruch 2, **dadurch gekennzeichnet, dass** die Verbindungsvorrichtung eine Winkeltriebvorrichtung umfasst.

4. Gerät zur Essenszubereitung nach Anspruch 2 oder 3, **dadurch gekennzeichnet, dass** die Verbindungsvorrichtung eine Nockenvorrichtung (59) umfasst.

5. Gerät zur Essenszubereitung nach einem der Ansprüche 1 bis 4, wobei der Getriebemotor (51; 151) so eingerichtet ist, dass er angesteuert werden kann zwischen:
- einer Ruhekonfiguration, in der sich das erste Sperrorgan (53) in der Stellung zur Nichtsicherung des Deckels (20) befindet und sich das zweite Sperrorgan (58) in der Stellung zur Nichtsicherung des Behälters (10) befindet, und
- einer Hubende-Konfiguration, in der sich das erste Sperrorgan (53) in der Stellung zur Sicherung des Deckels (20) befindet und sich das zweite Sperrorgan (58) in der Stellung zur Sicherung des Behälters (10) befindet, **dadurch gekennzeichnet, dass** der Getriebemotor (51; 151) so eingerichtet ist, dass er in einer Zwischenkonfiguration anhalten kann, in der:
- sich das erste Sperrorgan (53) in der Stellung zur Nichtsicherung des Deckels (20) befindet und sich das zweite Sperrorgan (58) in der Stellung zur Sicherung des Behälters (10) befindet.

6. Gerät zur Essenszubereitung nach Anspruch 5, das eine Übertragung zwischen dem Getriebemotor (51; 151) und einem Eingriffsabschnitt des ersten Sperrorgans (53) umfasst, der so eingerichtet ist, dass er in eine Gegeneingriffsform (22) des Deckels (20) eingreifen kann, **dadurch gekennzeichnet:**
- **dass** ein vorbestimmtes Spiel (JP) im Bereich der Übertragung oder zwischen dem Eingriffsabschnitt des ersten Sperrorgans (53) und der Gegeneingriffsform (22) des Deckels (20) vorgesehen ist,
- **dass** der vom Getriebemotor (51; 151) vorgegebene Hub des ersten Sperrorgans (53) zwischen der Ruhekonfiguration und der Zwischenkonfiguration kleiner oder gleich dem vorbestimmten Spiel (JP) ist.

7. Gerät zur Essenszubereitung nach einem der Ansprüche 1 bis 6, wobei der Behälter (10) einen Griff (12) umfasst, **dadurch gekennzeichnet, dass**:
- sich das erste Sperrorgan (53) aus dem Griff (12) heraus erstreckt, wenn das erste Sperrorgan (53) die Stellung zur Sicherung des Deckels (20) einnimmt, und/oder
- sich das zweite Sperrorgan (58) aus dem Gehäuse (40) heraus erstreckt, wenn das zweite Sperrorgan (58) die Stellung zur Sicherung des Behälters (10) einnimmt.

8. Gerät zur Essenszubereitung nach einem der Ansprüche 1 bis 7, **dadurch gekennzeichnet, dass** die Mittel zum Sichern der Verriegelung eine Stange (12) umfassen, die das erste Sperrorgan (53) trägt und so eingerichtet ist, dass sie vom Getriebemotor (51; 151) in einer Verschiebebewegung zwischen der Stellung zur Sicherung des Deckels (20) und der Stellung zur Nichtsicherung des Deckels (20), vorzugsweise gemäß einer Gleitverbindung, bewegt werden kann.

9. Gerät zur Essenszubereitung nach Anspruch 8, **dadurch gekennzeichnet, dass** die Mittel zum Sichern der Verriegelung eine Zahnstange (51b; 151b) umfassen, die mit dem Getriebemotor (51; 151) ineinandergreift, um die Stange (12) zu bewegen.

10. Gerät zur Essenszubereitung nach Anspruch 9 in Abhängigkeit von einem der Ansprüche 2 bis 6, **dadurch gekennzeichnet, dass** die Verbindungsvorrichtung an die Zahnstange (51b; 151b) gekoppelt ist.

11. Gerät zur Essenszubereitung nach einem der Ansprüche 1 bis 10, **dadurch gekennzeichnet, dass** die Mittel zum Sichern der Verriegelung umfassen:
- ein erstes elastisches Organ, wie etwa eine Feder, das so eingerichtet ist, dass es das erste Sperrorgan (53) aus der Stellung zur Sicherung des Deckels (20) in die Stellung zur Nichtsicherung des Deckels (20) drücken kann, und/oder
- ein zweites elastisches Organ, wie etwa eine Feder, das so eingerichtet ist, dass es das zweite Sperrorgan (58) aus der Stellung zur Sicherung des Behälters (10) in die Stellung zur Nichtsicherung des Behälters (10) drücken kann.

12. Gerät zur Essenszubereitung nach einem der Ansprüche 1 bis 11, **dadurch gekennzeichnet, dass** sich die erste Bewegungsrichtung von der zweiten Bewegungsrichtung unterscheidet, und vorzugsweise wobei die erste Bewegungsrichtung in einer ersten Ebene liegt, die 90°±15° in Bezug auf eine zweite Ebene, in welcher die zweite Bewegungsrichtung liegt, positioniert ist.

13. Gerät zur Essenszubereitung nach einem der Ansprüche 1 bis 12, **dadurch gekennzeichnet, dass** es Mittel zum Verriegeln des Deckels (20) umfasst, die so eingerichtet sind, dass sie den Deckel (20) in der Verschlussstellung verriegeln können, und so eingerichtet sind, dass sie manuell betätigt werden können.

14. Gerät zur Essenszubereitung nach einem der Ansprüche 1 bis 13, **dadurch gekennzeichnet, dass** der Behälter (10) so eingerichtet ist, dass er in einer Richtung zum Anbringen des Behälters (10), vorzugsweise in einer axialen Richtung des Behälters (10), verschiebbar am Gehäuse (40) angebracht werden kann, und wobei die zweite Bewegungsrichtung des zweiten Sperrorgans (58) senkrecht zur Anbringrichtung des Behälters (10) verläuft.

15. Gerät zur Essenszubereitung nach einem der Ansprüche 1 bis 14, **dadurch gekennzeichnet, dass** der Deckel (20) so eingerichtet ist, dass er entlang einer Drehachse zum Anbringen des Deckels (20), welche vorzugsweise zu einer axialen Richtung des abnehmbaren Behälters (10) parallel verläuft, drehend am Behälter (10) angebracht werden kann, und wobei die erste Bewegungsrichtung des ersten Sperrorgans (53) parallel zur Drehachse zum Anbringen des Deckels (20) verläuft.

16. Gerät zur Essenszubereitung nach einem der Ansprüche 1 bis 15, **dadurch gekennzeichnet, dass** es eine Heizvorrichtung umfasst, die so eingerichtet ist, dass sie eine Wärme zum Garen der im Behälter (10) aufgenommenen Lebensmittel bereitstellen kann.

## Claims

1. Food preparation appliance comprising:
- a housing (40),
- a container (10) mounted in a removable manner on the housing (40) and arranged to receive food to be prepared,
- at least one movable work member (30) arranged in the container (10) and arranged to work the food received in the container (10),
- a motor arranged in the housing (40) and arranged to set the movable work member (30) in motion,
- a removable cover (20) mounted in a removable manner in a closed position in such a way as to provide the container (10) with a closed state wherein the container (10) is closed by the cover (20), wherein the food preparation appliance comprises means for securing the locking of the cover (20), said means for securing the locking comprising:
• a first locking member (53) movable in a first displacement direction, between a non-fixed position of the cover (20), wherein a movement of opening of the cover (20) from the closed position is authorized, and a fixed position of the cover (20), wherein the first locking member (53) impairs the opening movement of the cover (20) from the closed position,
• a gear motor (51; 151) arranged to move the first locking member (53) in a first displacement direction between the non-fixed position of the cover (20) and the fixed position of the cover (20),
**characterized:**
- **in that** the means for securing the locking comprise a second locking member (58) movable in a second displacement direction, between a non-fixed position of the container (10), wherein a dismounting of the container (10) mounted on the housing (40) is authorized, and a fixed position of the container (10), wherein the second locking member (58) impairs the dismounting of the container (10) mounted on the housing (40),
- and **in that** the gear motor (51; 151) is arranged to move the second locking member (58) in a second displacement direction between the non-fixed position of the container (10) and the fixed position of the container (10).

2. Food preparation appliance, according to claim 1, **characterized in that** the means for securing the locking comprising at least one connection device arranged between the gear motor (51; 151) and the second locking member (58).

3. Food preparation appliance, according to claim 2, **characterized in that** the connection device comprises an angular gearbox device.

4. Food preparation appliance, according to claim 2 or 3, **characterized in that** the connection device comprises a cam device (59).

5. Food preparation appliance, according to one of claims 1 to 4, wherein the gear motor (51; 151) is arranged to be controlled between:
- an idle configuration, wherein the first locking member (53) is in the non-fixed position of the cover (20) and the second locking member (58) is in the non-fixed position of the container (10), and
- an end-of-travel configuration, wherein the first locking member (53) is in the fixed position of the cover (20) and the second locking member (58) is in the fixed position of the container (10), **characterized in that** the gear motor (51; 151) is arranged to be able to stop in an intermediate configuration, wherein:
- the first locking member (53) is in the non-fixed position of the cover (20) and the second locking member (58) is in the fixed position of the container (10).

6. Food preparation appliance, according to claim 5, comprising a transmission between the gear motor (51; 151) and an engagement portion of the first locking member (53) arranged to engage in a counter engagement (22) of the cover (20), **characterized:**
- **in that** a predetermined clearance (JP) is provided at the transmission or between the engagement portion of the first locking member (53) and the counter engagement (22) of the cover (20),
- **in that** the travel of the first locking member (53) imposed by the gear motor (51; 151) between the idle configuration and the intermediate configuration is less than or equal to the predetermined clearance (JP).

7. Food preparation appliance, according to one of claims 1 to 6, wherein the container (10) comprises a handle (12), **characterized in that**:
- the first locking member (53) extends outside the handle (12) when the first locking member (53) occupies the fixed position of the cover (20) and/or
- the second locking member (58) extends outside the housing (40) when the second locking member (58) occupies the fixed position of the container (10).

8. Food preparation appliance, according to one of claims 1 to 7, **characterized in that** the means for securing the locking comprise a rod (12) carrying the first locking member (53) and arranged to be moved by the gear motor (51; 151) according to a translation movement between the fixed position of the cover (20) and the non-fixed position of the cover (20), preferably according to a slide link.

9. Food preparation appliance, according to claim 8, **characterized in that** the means for securing the locking comprise a rack (51b; 151b) engaged with the gear motor (51; 151) to displace the rod (12).

10. Food preparation appliance, according to claim 9, in its dependency with one of claims 2 to 6, **characterized in that** the connection device is coupled to the rack (51b; 151b).

11. Food preparation appliance, according to one of claims 1 to 10, **characterized in that** the means for securing the locking comprise:
- a first elastic member, such as a spring, arranged to push the first locking member (53) from the fixed position of the cover (20) to the non-fixed position of the cover (20), and/or
- a second elastic member, such as a spring, arranged to push the second locking member (58) from the fixed position of the container (10) to the non-fixed position of the container (10).

12. Food preparation appliance, according to one of claims 1 to 11, **characterized in that** the first displacement direction is different from the second displacement direction, and preferably wherein the first displacement direction is comprised in a first plane positioned at 90°±15° with respect to a second plane comprising the second displacement direction.

13. Food preparation appliance, according to one of claims 1 to 12, **characterized in that** it comprises means for locking the cover (20), arranged to lock the cover (20) in the closed position, and arranged to be controlled manually.

14. Food preparation appliance, according to one of claims 1 to 13, **characterized in that** the container (10) is arranged to be mounted in translation on the housing (40) according to a container (10) mounting direction, preferably along an axial direction of the container (10), and wherein the second displacement direction of the second locking member (58) is perpendicular to the container (10) mounting direction.

15. Food preparation appliance, according to one of claims 1 to 14, **characterized in that** the cover (20) is arranged to be mounted in rotation on the container (10) according to a mounting rotation axis of the cover (20), preferably parallel to an axial direction of the removable container (10), and wherein the first displacement direction of the first locking member (53) is parallel to the mounting rotation axis of the cover (20).

16. Food preparation appliance, according to one of claims 1 to 15, **characterized in that** it comprises a heating device arranged to supply cooking heat to the food received in the container (10).
